# FASCICULE DE BREVET EUROPEEN

(11) **EP 0 493 181 B1**
(45) Date de publication et mention de la délivrance du brevet: **30.03.1994**
(21) Numéro de dépôt: 91403396.4
(22) Date de dépôt: 13.12.1991
(51) Int. Cl.: B62D 1/18

(54) **Dispositif de blocage en position d'une colonne de direction réglable de véhicule automobile**
Lageverriegelung für eine verstellbare Kraftfahrzeuglenksäule
Position lock for adjustable vehicle steering column

(30) Priorité: 28.12.1990 FR 9016494
(43) Date de publication de la demande: 01.07.1992
(73) Titulaire: ECIA - EQUIPEMENTS ET COMPOSANTS POUR L'INDUSTRIE AUTOMOBILE, F-25400 Audincourt (FR)
(72) Inventeur: Hoblingre, André, F-25700 Valentigney (FR)
(74) Mandataire: Habasque, Etienne Joel Jean-François

(56) Documents cités:
- EP-A- 0 242 928
- EP-A- 0 377 348
- EP-A- 0 427 584
- GB-A- 2 113 164
- US-A- 4 244 237

## Description

La présente invention concerne un dispositif de blocage en position d'une colonne de direction réglable de véhicule automobile.

Certains véhicules automobiles sont munis depuis déjà plusieurs années de dispositifs de réglage de la position du volant, destinés à adapter la position de celui-ci à la morphologie du conducteur du véhicule.

C'est ainsi que la position de la colonne et donc du volant est réglable axialement et par pivotement.

Dans l'état de la technique, ces dispositifs de réglage comportent une structure de support de colonne reliée au reste de la structure du véhicule et comportant deux flasques entre lesquels est disposée la colonne et des moyens de blocage de la colonne en position par rapprochement de flasques.

Ces moyens de blocage comprennent par exemple un tirant s'étendant entre les flasques, dont une première extrémité est en appui sur l'un des flasques et dont la seconde est reliée à des éléments de blocage.

Différents modes de réalisation de ces éléments de blocage ont été proposés.

C'est ainsi par exemple, que ces éléments de blocage peuvent être constitués par un système à vis-écrou, un système à genouillère, ou encore un système à excentrique, relié à un levier de manoeuvre.

Un autre mode de réalisation de ces moyens de blocage est décrit dans le document GB-A-2 113 164 au nom de FORD MOTOR COMPANY LIMITED et présente les caractéristiques définies dans le préambule de la revendication 1.

Ce document décrit en effet un dispositif dont la structure générale se présente sous la forme décrite précédemment et dans laquelle les éléments de blocage comprennent un organe de butée à la seconde extrémité du tirant, un organe d'appui intermédiaire en contact avec l'autre flasque de la structure de support et déplaçable axialement sur le tirant et un organe de manoeuvre disposé entre l'organe de butée et l'organe d'appui intermédiaire, relié à un levier de manoeuvre, et déplaçable à rotation dans un plan perpendiculaire au tirant, entre une position active de blocage de la colonne et une position escamotée de déblocage de celle-ci.

Les surfaces en regard de l'organe de manoeuvre et de l'organe d'appui intermédiaire ou de l'organe de butée, comprennent l'une, au moins une partie en saillie adaptée pour coopérer avec une rampe de l'autre, pour écarter ces deux surfaces l'une de l'autre et donc les éléments de blocage correspondants afin de rapprocher les flasques pour bloquer la colonne, lors du déplacement du levier de manoeuvre.

Dans le mode de réalisation décrit dans ce document, les parties en saillie sont constituées par des bossages venus de matière avec l'organe de manoeuvre et les rampes sont ménagées sur l'organe d'appui intermédiaire .

Cependant, ce dispositif présente un certain nombre d'inconvénients au niveau de la manoeuvre du levier.

En effet, on conçoit que plus le serrage de la colonne à obtenir est important, plus les frottements entre ces différents éléments de blocage sont importants et donc plus la manoeuvre du levier est difficile.

Le but de l'invention est de résoudre ces problèmes en proposant un dispositif de blocage de colonne dont la manoeuvre du levier soit relativement facile.

A cet effet, l'invention a pour objet un dispositif de blocage tel que décrit précédemment, caractérisé en ce qu'il comporte au moins un organe de roulement et au moins un élément de roulement disposés deux à deux dans un même évidement traversant l'organe de manoeuvre, lesdits élément et organe de roulement étant en appui l'un contre l'autre, l'un faisant saillie entre l'organe de manoeuvre et l'organe d'appui intermédiaire et l'autre entre l'organe de manoeuvre et l'organe de butée.

L'invention sera mieux comprise à l'aide de la description qui va suivre, donnée uniquement à titre d'exemple et faite en se référant aux dessins annexés, sur lesquels :
- la Fig.1 représente une vue en perspective éclatée d'un dispositif de blocage en position d'une colonne de direction réglable de véhicule, de l'état de la technique;
- la Fig.2 représente une vue en perspective de moyens de blocage selon une réalisation développée par la demanderesse mais non conforme à l'invention; et
- la Fig.3 représente une vue en perspective d'un mode de réalisation de moyens de blocage entrant dans la constitution d'un dispositif de blocage selon l'invention.

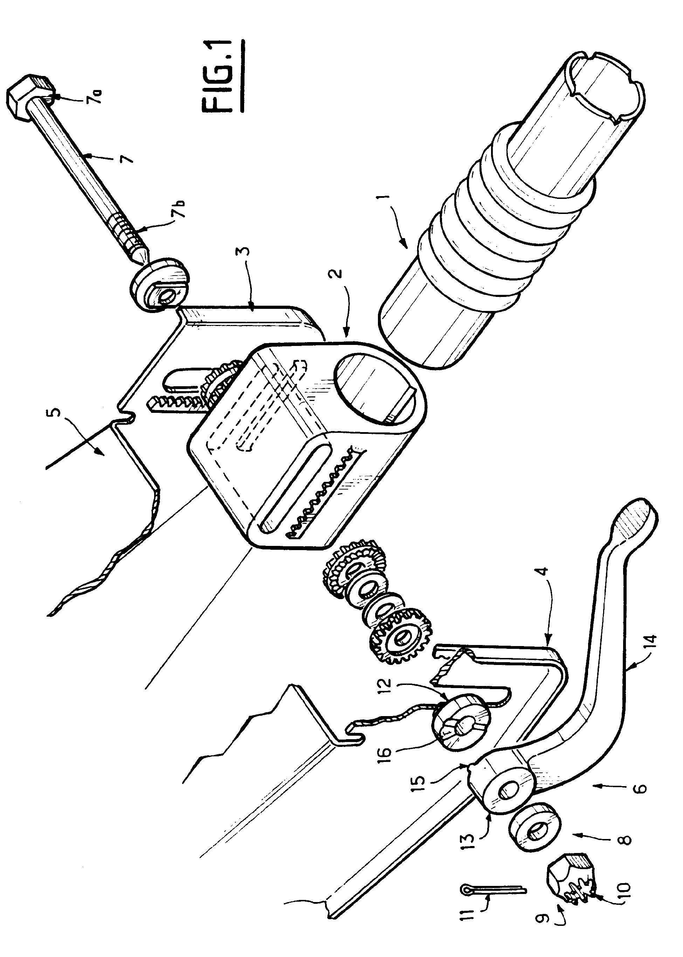

Ainsi qu'on peut le voir sur la Fig.1 qui représente un dispositif de blocage en position d'une colonne de direction réglable 1 de véhicule, de l'état de la technique, cette colonne 1 est disposée dans un organe de liaison 2 interposé entre les flasques 3 et 4 d'une structure 5 de support de colonne, reliée au reste de la structure du véhicule par tous moyens appropriés.

Ce dispositif comporte également des moyens 6 de blocage de la colonne en position par rapprochement des flasques 3 et 4 de la structure de support. Ces moyens de blocage comprennent par exemple un tirant 7 s'étendant entre les deux flasques 3 et 4 de la structure de support et dont une première extrémité 7a est en appui sur l'un des flasques, par exemple 3, et dont l'autre extrémité 7b est reliée à des éléments de blocage 8.

Ces éléments de blocage comprennent un organe de butée 9 constitué par exemple par un écrou 10 associé à une goupille 11, et disposé à la seconde extrémité 7b du tirant 7, un organe d'appui intermédiaire 12 en contact avec l'autre flasque 4 de la structure de support et déplaçable axialement sur le tirant 7 et enfin un organe de manoeuvre 13 disposé entre l'organe de butée 9 et l'organe d'appui intermédiaire 12, relié à un levier de manoeuvre 14 et déplaçable à rotation dans un plan perpendiculaire au tirant 7, entre une position active de blocage de la colonne et une position escamotée de déblocage de celle-ci.

Dans le mode de réalisation représenté sur cette figure, les surfaces en regard de l'organe de manoeuvre 13 et de l'organe d'appui intermédiaire 12 comportent l'une, des parties en saillie 15 adaptée pour coopérer avec des rampes 16 de l'autre, pour écarter ces deux surfaces l'une de l'autre et donc les éléments de blocage correspondants afin de rapprocher les flasques pour bloquer la colonne en position, lors du déplacement du levier de manoeuvre.

Ainsi qu'on l'a mentionné précédemment, cette structure présente un certain nombre d'inconvénients, notamment au niveau de la difficulté de manoeuvre du levier en raison des frottements entre les différents éléments de blocage.

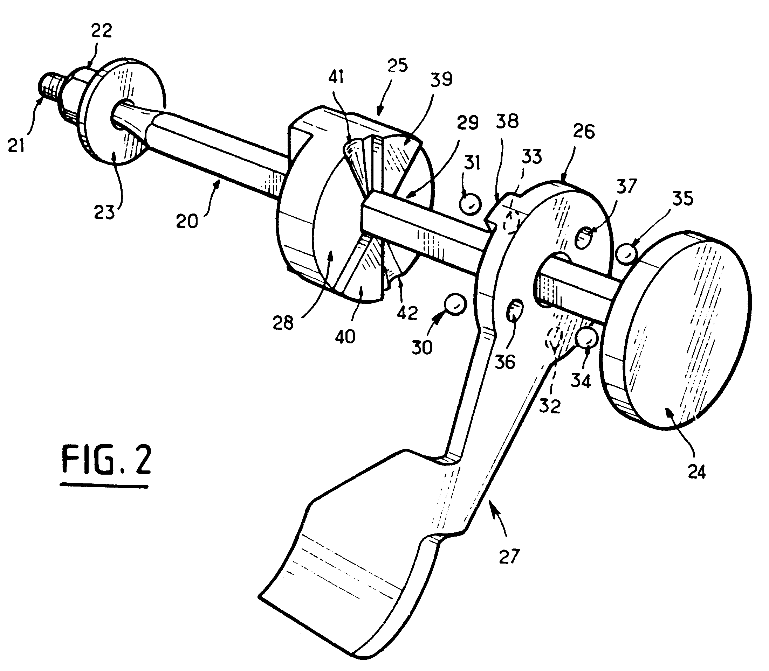

Si l'on se reporte maintenant à la Fig.2, qui représente une vue en perspective de moyens de blocage entrant dans la constitution d'un dispositif de blocage en position, on peut constater que ces moyens comportent également un tirant 20 dont l'une des extrémités 21 est filetée et adaptée pour coopérer avec un écrou 22 et une rondelle 23 d'appui sur l'un des flasques de la structure de support.

On notera que les parties du dispositif non décrites en regard de cette figure, peuvent être identiques à celles décrites en regard de la Fig.1.

L'autre extrémité du tirant porte des éléments de blocage qui comprennent un organe de butée 24 constitué par exemple par une plaque de butée fixée à l'extrémité correspondante du tirant 20, et un organe d'appui intermédiaire 25 adapté pour s'appuyer contre l'autre flasque de la structure de support, cet organe d'appui intermédiaire étant monté déplaçable axialement sur le tirant.

Ces éléments de blocage comprennent également un organe de manoeuvre 26 disposé entre l'organe de butée 24 et l'organe d'appui intermédiaire 25, relié à un levier de manoeuvre 27 et déplaçable à rotation dans un plan perpendiculaire au tirant 20 entre une position active de blocage de la colonne et une position escamotée de déblocage de celle-ci.

Ainsi qu'on peut le constater, la surface de l'organe d'appui intermédiaire 25 en regard de l'organe de manoeuvre, comporte des rampes 28 et 29 par exemple diamétralement opposées, qui sont adaptées pour coopérer avec des parties en saillie sur la surface correspondante de l'organe de manoeuvre 26.

Plus particulièrement, ces parties en saillie peuvent être constituées par des organes de roulement reliés à cet organe de manoeuvre, ces organes de roulement étant constitués par exemple par des billes 30 et 31 disposées dans des évidements respectivement 32 et 33 ménagés dans la surface correspondante de l'organe de manoeuvre 26.

On notera que des éléments de roulement constitués par exemple par des billes 34 et 35 peuvent également être disposés entre l'organe de butée 24 et l'organe de manoeuvre 26.

Ces billes sont par exemple disposées dans des évidements 36 et 37 ménagés dans la surface correspondante de l'organe de manoeuvre 26, en regard de l'organe de butée 24.

On conçoit qu'ainsi le déplacement de l'organe de manoeuvre 26 et donc du levier de manoeuvre 27 est facilité dans la mesure où ces organes et éléments de roulement facilitent le déplacement des différents éléments de blocage les uns par rapport aux autres.

Les éléments de roulement 34 et 35 assurent un maintien en position correcte de l'organe de manoeuvre 26 par rapport à l'organe de butée 24 tout en facilitant le déplacement de l'organe de manoeuvre pendant que les organes de roulement 30 et 31 se déplacent sur les rampes 28 et 29 de l'organe d'appui intermédiaire 25, pour écarter les surfaces en regard de cet organe d'appui intermédiaire et de l'organe de manoeuvre, afin d'écarter ces éléments de blocage pour rapprocher les flasques et bloquer la colonne en position lors du déplacement de l'organe de manoeuvre 26.

Il va de soi bien entendu qu'un seul organe de roulement, une seule rampe et un seul élément de roulement peuvent être prévus respectivement entre l'organe de manoeuvre et l'organe d'appui intermédiaire et entre l'organe de manoeuvre et l'organe de butée.

Bien entendu également, les rampes adaptées pour coopérer avec les organes de roulement peuvent être prévues sur une surface autre que celle de l'organe d'appui intermédiaire en regard de l'organe de manoeuvre.

C'est ainsi par exemple que ces rampes peuvent être ménagées sur la surface de l'organe de manoeuvre 26 en regard de l'organe d'appui intermédiaire 25 et les organes de roulement 30, 31 sont alors reliés à celui-ci. Cependant, ces rampes peuvent également être prévues sur la surface de l'organe de butée 24 en regard de l'organe de manoeuvre 26, les organes de roulement étant solidaires de celui-ci.

Ces rampes peuvent également être prévues sur la surface de l'organe de manoeuvre 26 en regard de l'organe de butée 24, les organes de roulement étant alors reliés à cet organe de butée 24.

Bien que dans le dispositif représenté sur la Fig.2, on ait utilisé deux organes de roulement et deux éléments de roulement interposés entre l'organe de manoeuvre et l'organe d'appui intermédiaire et l'organe de butée respectivement, un ou plus de deux organes et/ou éléments de roulement peuvent être utilisés.

On notera également que les surfaces en regard de l'organe de manoeuvre 26 et de l'organe d'appui intermédiaire 25 ou de l'organe de butée 24 comprennent des parties en saillie de butée adaptées pour coopérer les unes avec les autres, pour délimiter une course de déplacement de l'organe de manoeuvre 26 et donc du levier 27.

Ainsi, dans le dispositif représenté sur cette Fig.2, ces parties en saillie de butée sont prévues sur les surfaces en regard de l'organe de manoeuvre 26 et de l'organe d'appui intermédiaire 25.

En effet, on voit sur la surface de l'organe de manoeuvre 26 en regard de l'organe d'appui intermédiaire 25, une partie en saillie 38 adaptée pour coopérer avec des parties en saillie 39 et 40 diamétralement opposées sur la surface de l'organe d'appui intermédiaire, pour délimiter une course de déplacement de cet organe de manoeuvre.

On notera également que la surface de l'organe d'appui intermédiaire 25 ou de l'organe de butée 24, en regard de l'organe de manoeuvre 26, peut comporter au moins un évidement de réception du ou de chaque organe ou élément de roulement correspondant, pour délimiter une position de blocage stable.

Ainsi, dans le dispositif représenté sur la Fig.2, deux évidements sont ménagés dans les rampes de l'organe d'appui intermédiaire 25 en regard de l'organe de manoeuvre 26, ces évidements étant référencés 41 et 42 et étant adaptés pour recevoir les organes de roulement 30 et 31 en position de blocage stable de la colonne.

Ceci permet de faire ressentir à l'utilisateur une discontinuité d'effort lui indiquant une position de blocage stable de la colonne.

Bien entendu, ces évidements peuvent également être prévus dans l'organe de butée 24. Ces évidements sont alors adaptés pour recevoir les éléments de roulement 34, 35 lors de l'arrivée de l'organe de manoeuvre 26, et donc de ces éléments de roulement, en position de blocage stable de la colonne.

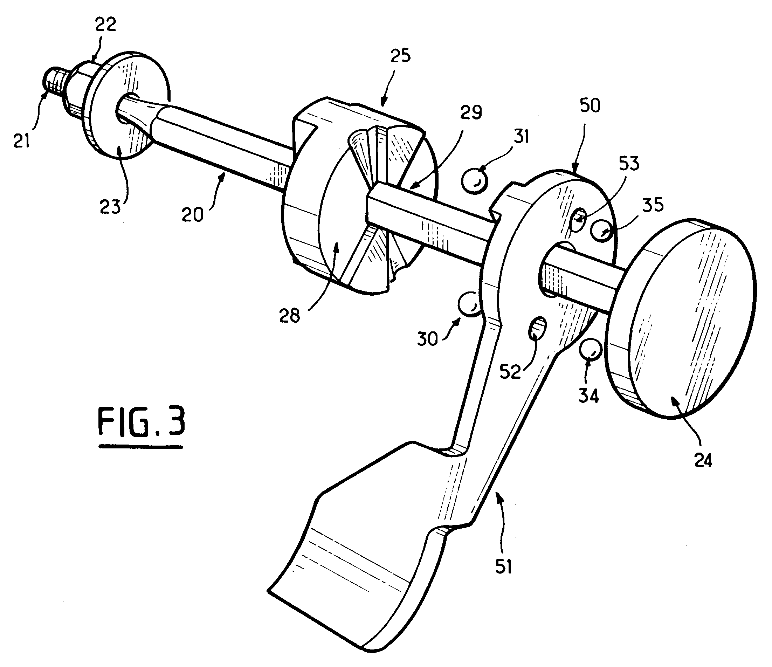

Sur la Fig.3, on a représenté un mode de réalisation des moyens de blocage selon l'invention.

Sur cette figure, les éléments identiques déjà décrits en regard de la Fig.2 portent les mêmes références que sur cette figure. C'est ainsi que ces moyens de blocage comprennent toujours un tirant 20 à l'extrémité 21 duquel sont prévus un écrou 22 et une rondelle d'appui 23.

L'autre extrémité du tirant comporte l'organe de butée 24 et l'organe d'appui intermédiaire 25 entre lesquels est disposé un organe de manoeuvre 50. L'organe d'appui intermédiaire comporte toujours des rampes 28 et 29 adaptées pour coopérer avec des organes de roulement 30 et 31 reliés à l'organe de manoeuvre 50. Des éléments de roulement 34 et 35 sont également interposés entre cet organe de manoeuvre 50 et l'organe de butée 24, tandis que l'organe de manoeuvre 50 est toujours relié à un levier de manoeuvre 51.

Alors que dans le dispositif représenté sur la Fig.2, les organes de roulement et les éléments de roulement sont disposés dans des trous distincts et séparés, dans le mode de réalisation représenté sur la Fig.3, le ou chaque organe de roulement interposé entre l'organe de manoeuvre 50 et l'organe d'appui intermédiaire 25 et le ou chaque élément de roulement interposé entre l'organe de manoeuvre 50 et l'organe de butée 24 de la seconde extrémité du tirant, sont disposés deux à deux dans un même évidement respectivement 52 et 53, traversant l'organe de manoeuvre 50, et sont en appui l'un contre l'autre de manière que l'un fasse saillie entre l'organe d'appui intermédiaire 25 et l'organe de manoeuvre 50 et l'autre, entre l'organe de manoeuvre 50 et l'organe de butée 24.

On conçoit qu'ainsi lors du déplacement de l'organe de manoeuvre 50, ces organes et ces éléments de de roulement constitués par des billes tournent l'un sur l'autre, ce qui permet de réduire encore les frottements et de faciliter le déplacement de cet organe de manoeuvre 50 et donc du levier de manoeuvre 51.

Par ailleurs, dans le mode de réalisation conforme à l'invention, l'organe de manoeuvre 50 constitue uniquement un moyen de déplacement de ces organes et éléments de roulement, et contrairement au dispositif représenté sur la Fig.2, ne participe plus à la transmission du serrage entre l'organe de butée 24 et l'organe d'appui intermédiaire 25.

En effet, il existe dans le mode de réalisation selon l'invention une liaison d'appui directe entre l'organe de butée 24, les éléments de roulement 34 et 35, les organes de roulement 30 et 31 et les rampes 28 et 29 de l'organe d'appui intermédiaire en contact avec l'autre flasque de la structure de support.

Bien que dans le mode de réalisation de l'invention, on ait représenté des organes et des éléments de roulement constitués par des billes, d'autres organes tels que des rouleaux peuvent être utilisés.

## Revendications

1. Dispositif de blocage en position d'une colonne de direction réglable de véhicule automobile, du type comportant une structure (5) de support de colonne, reliée au reste de la structure du véhicule et comportant deux flasques (3,4) entre lesquels est disposée la colonne (1) et des moyens (6) de blocage de la colonne en position par rapprochement des flasques, comprenant un tirant (20) s'étendant entre les flasques, dont la première extrémité (21) est en appui sur l'un des flasques et la seconde est reliée à des éléments de blocage comprenant un organe de butée (24), à la seconde extrémité du tirant, un organe d'appui intermédiaire (25) en contact avec l'autre flasque de la structure de support et déplaçable axialement sur le tirant (20) et un organe de manoeuvre (26; 50) disposé entre l'organe de butée (24) et l'organe d'appui intermédiaire (25), relié à un levier de manoeuvre (27; 51) et déplaçable à rotation dans un plan perpendiculaire au tirant (20) entre une position active de blocage de la colonne et une position escamotée de déblocage de celle-ci, les surfaces en regard de l'organe de manoeuvre (26; 50) et de l'organe d'appui intermédiaire (25) ou de l'organe de butée (24), comprenant l'une, au moins une partie en saillie (30, 31) adaptée pour coopérer avec une rampe (28, 29) de l'autre, pour écarter ces deux surfaces l'une de l'autre et donc les éléments de blocage correspondants afin de rapprocher les flasques pour bloquer la colonne lors du déplacement du levier de manoeuvre, caractérisé en ce qu'il comporte au moins un organe de roulement (30,31) et au moins un élément de roulement (34,35) disposés deux à deux dans un même évidement (52, 53) traversant l'organe de manoeuvre (50), lesdits élément et organe de roulement étant en appui l'un contre l'autre, l'un faisant saillie entre l'organe de manoeuvre (50) et l'organe d'appui intermédiaire (25) et l'autre entre l'organe de manoeuvre (50) et l'organe de butée (24).

2. Dispositif de blocage selon la revendication 1, caractérisé en ce que deux organes de roulement (30,31) sont disposés sur l'élément de blocage correspondant, de part et d'autre du tirant (20) et adaptés pour coopérer chacun avec une rampe (28,29) en regard, de la surface correspondante de l'autre élément.

3. Dispositif de blocage selon la revendication 1 ou 2, caractérisé en ce que la ou chaque rampe (28, 29) est ménagée sur la surface de l'organe d'appui intermédiaire (25) en regard de l'organe de manoeuvre (50).

4. Dispositif de blocage selon l'une quelconque des revendications précédentes, caractérisé en ce que le ou chaque organe de roulement (30,31) et le ou chaque élément de roulement (34,35) comporte une bille.

5. Dispositif de blocage selon l'une quelconque des revendications précédentes, caractérisé en ce que les surfaces en regard de l'organe de manoeuvre (26;50) et de l'organe d'appui intermédiaire (25) ou de l'organe de butée (24), comprennent des parties en saillie (38, 39,40) de butée adaptées pour coopérer les unes avec les autres pour délimiter une course de déplacement de l'organe de manoeuvre (26; 50).

6. Dispositif de blocage selon la revendication 5, caractérisé en ce que les parties en saillie de butée sont ménagées sur les surfaces en regard de l'organe de manoeuvre (26; 50) et de l'organe d'appui intermédiaire (25) .

7. Dispositif de blocage selon l'une quelconque des revendications précédentes, caractérisé en ce que la surface de l'organe d'appui intermédiaire (25) ou de l'organe de butée (24), en regard de l'organe de manoeuvre (26; 50) comprend un évidement (41, 42) de réception du ou de chaque organe ou élément de roulement correspondant, délimitant une position stable de blocage de la colonne.

8. Dispositif de blocage selon la revendication 7, caractérisé en ce que le ou chaque évidement (41, 42) de réception délimitant une position de blocage stable, est ménagé dans la ou chaque rampe (28,29) de la surface de l'organe de l'appui intermédiaire (25) en regard de l'organe de manoeuvre (26; 50) et est adapté pour recevoir le ou chaque organe de roulement.

## Patentansprüche

1. Lageverriegelung für eine verstellbare Kraftfahrzeuglenksäule von dem Typ, der eine Tragestruktur (5) der Säule aufweist, die mit der übrigen Struktur des Fahrzeugs verbunden ist und zwei Flansche (3,4) umfasst, zwischen denen die Säule (1) und Mittel (6) zur Lageverriegelung der Säule durch Annäherung der Flansche angeordnet sind, wobei diese Mittel einen Bolzen (20) aufweisen, der sich zwischen den Flanschen erstreckt und dessen erstes Ende (21) auf eine der Flansche gestützt und das zweite mit Verriegelungselementen verbunden ist, die ein Anschlagorgan (24) am zweiten Ende des Bolzens aufweisen, ein dazwischenliegendes Stützorgan (25), das in Kontakt mit dem anderen Flansch der Tragestruktur und achsial auf dem Bolzen (20) verschiebbar ist, und ein zwischen dem Anschlagorgan (24) und dem dazwischenliegenden Stützorgan (25) angeordnetes Betätigungsorgan (26; 50), das mit einem Betätigungshebel (27; 51) verbunden und bei Drehung in einer senkrechten Ebene zum Bolzen (20) zwischen einer wirksamen Verriegelungslage der Säule und einer versenkten Entriegelungslage derselben verschiebbar ist, wobei die eine der Flächen gegenüber dem Betätigungsorgan (26; 50) und dem dazwischenliegenden Stützorgan (25) oder dem Anschlagorgan (24) mindestens ein hervorspringendes Teil (30, 31) aufweist, das geeignet ist, um mit einer Rampe (28,29) der anderen zusammenzuwirken, um diese beiden Flächen, die eine von der anderen, und somit die entsprechenden Verriegelungselemente voneinander zu trennen, um die Flansche anzunähern, um die Säule bei Verschiebung des Betätigungshebels zu verriegeln, dadurch gekennzeichnet, daß sie mindestens ein Rollorgan (30, 31) und mindestens ein Rollelement (34, 35) umfasst, die zwei zu zwei in einer gleichen Aussparung (52, 53) angeordnet sind, die das Betätigungsorgan (50) durchquert, wobei sich das genannte Rollelement und -organ das eine gegen das andere stützt, das eine zwischen dem Betätigungsorgan (50) und dem dazwischenliegenden Stützorgan (25) und das andere zwischen dem Betätigungsorgan (50) und dem Anschlagorgan (24) einen Vorsprung bildet.

2. Verriegelung nach Anspruch 1, dadurch gekennzeichnet, daß die beiden Rollorgane (30, 31) auf dem entsprechenden Verriegelungselement beiderseits des Bolzens (20) angeordnet und angepaßt sind, um jedes mit einer gegenüberliegenden Rampe (28, 29) der entsprechenden Fläche des anderen Elements zusammenzuwirken.

3. Verriegelung nach Anspruch 1 oder 2, dadurch gekennzeichnet, daß die oder jede Rampe (28, 29) auf der Fläche des dazwischenliegenden Stützorgans (25) gegenüber dem Betätigungsorgan (50) ausgeführt ist.

4. Verriegelung nach irgendeinem der vorhergehenden Ansprüche, dadurch gekennzeichnet, daß das oder jedes Rollorgan (30, 31) und das oder jedes Rollelement (34, 35) aus einer Kugel besteht.

5. Verriegelung nach irgendeinem der vorhergehenden Ansprüche, dadurch gekennzeichnet, daß die Flächen gegenüber dem Betätigungsorgan (26; 50) und dem dazwischenliegenden Stützorgan (25) oder dem Anschlagorgan (24) hervorspringende Anschlagteile (38, 39, 40) aufweisen, die angepaßt sind, um zusammenzuwirken, die einen mit den. anderen, um einen Verschiebungsweg des Betätigungsorgans (26; 50) zu begrenzen.

6. Verriegelung nach Anspruch 5, dadurch gekennzeichnet, daß diese hervorspringenden Anschlagteile auf den Flächen gegenüber dem Betätigungsorgan (26; 50) und dem dazwischenliegenden Stützorgan (25) ausgeführt sind.

7. Verriegelung nach irgendeinem der vorhergehenden Ansprüche, dadurch gekennzeichnet, daß die Fläche des dazwischenliegenden Stützorgans (25) oder des Anschlagorgans (24) gegenüber den Betätigungsorgan (26; 50) eine Aussparung (41, 42) zur Aufnahme des oder jedes entsprechenden Rollorgans oder -elements aufweist, wodurch eine stabile Verriegelungslage der Säule begrenzt wird.

8. Verriegelung nach Anspruch 7, dadurch gekennzeichnet, daß die oder jede Aufnahmeaussparung (41, 42), die eine stabile Verriegelungslage begrenzt, in der oder jeder Rampe (28, 29) der Fläche des dazwischenliegenden Stützorgans (25) gegenüber dem Betätigungsorgan (26; 50) ausgeführt und angepaßt ist, um das oder jedes Rollorgan aufzunehmen.

## Claims

1. Device for locking in position an adjustable steering column of a motor vehicle, of the type comprising a column support structure (5) connected to the rest of the structure of the vehicle and comprising two end plates (3, 4) between which is arranged the column (1) and means (6) for locking the column in position by bringing the end plates together, the device comprising a tie rod (20) extending between the end plates, whereof the first end (21) bears against one of the end plates and the second end is connected to locking elements comprising a stop member (24), at the second end of the tie rod, an ;ntermediate bearing member (25) in contact with the other end plate of the support structure and movable axially on the tie rod (20) and an operating member (26; 50) arranged between the stop member (24) and the intermediate bearing member (25), connected to an operating lever (27; 51) and rotatably movable in a plane perpendicular to the tie rod (20) between an operative position for locking the column and a retracted position for unlocking the latter, one of the facing surfaces of the operating member (26; 50) and of the intermediate bearing member (25) or of the stop member (24) comprising at least one projecting part (30, 31) adapted to cooperate with a ramp (28, 29) of the other, so as to separate these two surfaces from one another and hence the corresponding locking elements so as to bring the end plates together in order to lock the column when the operating lever is moved, characterized in that the device comprises at least one rolling member (30, 31) and at least one rolling element (34, 35) which are arranged in twos in the same cutout (52, 53) passing through the operating member (50), the said rolling element and member bearing against one another, the one projecting between the operating member (50) and the intermediate bearing member (25) and the other between the operating member (50) and the stop member (24).

2. Locking device according to Claim 1, characterized in that the two rolling members (30, 31) are arranged on the corresponding locking element, on either side of the tie rod (20), and are adapted each to cooperate with a facing ramp (28, 29) of the corresponding surface of the other element.

3. Locking device according to Claim 1 or 2, characterized in that the or each ramp (28, 29) is formed on the surface of the intermediate bearing member (25) facing the operating member (50).

4. Locking device according to any one of the preceding claims, characterized in that the or each rolling member (30, 31) and the or each rolling element (34, 35) comprises a ball.

5. Locking device according to any one of the preceding claims, characterized in that the facing surfaces of the operating member (26; 50) and of the intermediate bearing member (25) or of the stop member (24) comprise projecting stop parts (38, 39, 40) adapted to cooperate with one another to delimit a movement range of the operating member (26; 50).

6. Locking device according to Claim 5, characterized in that the projecting stop parts are made on the facing surfaces of the operating meniber (26; 50) and of the intermediate bearing member (25).

7. Locking device according to any one of the preceding claims, characterized in that the surface of the intermediate bearing member (25) or of the stop member (24) facing the operating member (26; 50) comprises a cutout (41, 42) for receiving the or each corresponding rolling bearing member or element, delimiting a stable position for locking the column

8. Locking device according to Claim 7, characterized in that the or each receiving cutout (41, 42) delimiting a stable locking position is formed in the or each ramp (28, 29) of the surface of the intermediate bearing member (25) facing the operating member (26; 50) and is adapted to receive the or each rolling member.
